(19) Europäisches Patentamt
European Patent Office
Office européen des brevets

(11) **EP 4 207 349 A1**

(12) **EUROPEAN PATENT APPLICATION**
published in accordance with Art. 153(4) EPC

(43) Date of publication:
**05.07.2023 Bulletin 2023/27**

(21) Application number: **21886975.8**

(22) Date of filing: **01.11.2021**

(51) International Patent Classification (IPC):
$H01M\ 4/13^{(2010.01)}$    $H01M\ 4/139^{(2010.01)}$
$H01M\ 4/04^{(2006.01)}$    $H01M\ 10/052^{(2010.01)}$
$H01M\ 4/02^{(2006.01)}$

(52) Cooperative Patent Classification (CPC):
**H01M 4/02; H01M 4/04; H01M 4/13; H01M 4/139; H01M 10/052;** Y02E 60/10

(86) International application number:
**PCT/KR2021/015624**

(87) International publication number:
**WO 2022/092982 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.10.2020 KR 20200143792**

(71) Applicant: **LG Energy Solution, Ltd.**
**Seoul 07335 (KR)**

(72) Inventors:
• **LEE, Taek-Soo**
 **Daejeon 34122 (KR)**
• **KIM, Cheol-Woo**
 **Daejeon 34122 (KR)**
• **JEON, Shin-Wook**
 **Daejeon 34122 (KR)**
• **CHOY, Sang-Hoon**
 **Daejeon 34122 (KR)**

(74) Representative: **Plasseraud IP**
**66, rue de la Chaussée d'Antin**
**75440 Paris Cedex 09 (FR)**

(54) **NEGATIVE ELECTRODE AND SECONDARY BATTERY COMPRISING SAME**

(57)    Disclosed are a negative electrode, including: a negative electrode current collector; and a negative electrode active material layer disposed on at least one surface of the negative electrode current collector, and satisfying the following formula:

$$B/A \leq 1.2,$$

wherein, in a graph measuring the binding force according to a normalized thickness of the active material layer, A is defined as a maximum value of the binding force of the active material layer in a normalized thickness of 20-60 and B is defined as a maximum value of the binding force of the active material layer in a normalized thickness of 70-90, and
a lithium secondary battery including the negative electrode.

FIG. 1

**Description**

TECHNICAL FIELD

The present disclosure relates to a negative electrode having a uniform distribution of binding force in a thickness direction and improved resistance characteristics, and a secondary battery including the same.
The present application claims priority to Korean Patent Application No. 10-2020-0143792 filed on October 30, 2020 in the Republic of Korea, the disclosures of which are incorporated herein by reference.

BACKGROUND ART

As technical development and needs for mobile instruments have been increased, secondary batteries that are rechargeable and can be downsized and provided with high capacity have been increasingly in demand. In addition, among such secondary batteries, lithium secondary batteries having high energy density and operating voltage have been commercialized and used widely.
A lithium secondary battery has a structure including: an electrode assembly having a positive electrode and a negative electrode, each of which includes an active material coated on an electrode current collector, and a porous separator interposed between both electrodes; and a lithium salt-containing electrolyte injected to the electrode assembly. The electrode is obtained by applying slurry including an active material, a binder and a conductive material dispersed in a solvent to a current collector, followed by drying and pressing.
In case of commercially available batteries, each of the negative electrode and the positive electrode is formed by coating each electrode slurry on each electrode current collector once. In this case, when the binder distribution in the section of the electrode layer is determined, the binder content is high in the vicinity of the surface but is reduced toward the current collector.
The electrode shows reduced binding force due to a decrease in binder content in the vicinity of the current collector. Thus, when the binder content is increased to improve the problem of degradation of binding force, the negative electrode shows increased resistance, resulting in the problem of capacity reduction.

DISCLOSURE

Technical Problem

The present disclosure is designed to solve the problems of the related art, and therefore the present disclosure is directed to providing a negative electrode having a uniform distribution of binding force in a thickness direction and improved resistance characteristics without increasing a binder content.
The present disclosure is also directed to providing a lithium secondary battery including the negative electrode.

Technical Solution

In one aspect of the present disclosure, there is provided a negative electrode according to any one of the following embodiments.
According to the first embodiment, there is provided a negative electrode, including:

a negative electrode current collector; and
an active material layer disposed on at least one surface of the negative electrode current collector,
and satisfying the following formula:

$$B/A \leq 1.2,$$

wherein, in a graph measuring the binding force according to a normalized thickness of the active material layer, A is defined as a maximum value of the binding force of the active material layer in a normalized thickness of 20-60 and B is defined as a maximum value of the binding force of the active material layer in a normalized thickness of 70-90, and
the normalized thickness of the active material layer means a converted value of the active material layer thickness to be changed according to the measurement of the binding force on the assumption that the initial thickness of the active material layer is 100.

According to the second embodiment, there is provided the negative electrode as defined in the first embodiment, wherein the B/A may be 0.3-1.2.

According to the third embodiment, there is provided the negative electrode as defined in the first or the second embodiment, wherein, in a graph measuring the binding force according to a normalized thickness of the active material layer, the maximum value of the binding force of the active material layer is positioned at 15-85 when the thickness of the active material layer is converted into 100.

According to the fourth embodiment, there is provided the negative electrode as defined in any one of the first to the third embodiments, wherein the maximum value of the binding force of the active material layer is positioned at 25-75 when the thickness of the active material layer is converted into 100.

According to the fifth embodiment, there is provided the negative electrode as defined in any one of the first to the fourth embodiments, wherein the method for measuring the binding force according to the normalized thickness of the negative electrode active material layer includes the steps of:

measuring the thickness of the active material layer in which the active material layer including an active material, a conductive material, and a binder is formed on the current collector (step 1);
fixing the active material layer of the negative electrode to the substrate so that it is in contact (step 2);
after attaching a removal tape to the current collector of the negative electrode, measuring the binding force and the thickness of the active material layer after removal while removing the removal tape and the current collector together (step 3);
after attaching a removal tape on the active material layer from which the current collector has been removed, measuring the binding force and the thickness of the active material layer after removal while removing a portion of the removal tape and the active material layer together, and repeating this measuring process to a measurement limit (step 4); and
checking the change in binding force according to the thickness of the active material layer through the measurement values measured in steps 3 and 4, in which case the thickness of the active material layer is converted into a normalized thickness and displayed (step 5).

According to the sixth embodiment, there is provided the negative electrode as defined in any one of the first to the fifth embodiments, wherein the active material of the active material layer includes artificial graphite, natural graphite, hard carbon, soft carbon, graphitized carbon fiber, graphitized mesocarbon microbead, petroleum cokes, resin fired body, carbon fiber, pyrolysis carbon, Si, silicon oxide represented by $SiOx$ $(0 < x \leq 2)$, lithium titanium oxide (LTO), lithium metal, or two or more thereof.

According to the seventh embodiment, there is provided a lithium secondary battery including the negative electrode as defined in any one of the first to the sixth embodiments.

According to the eighth embodiment, there is provided a method for manufacturing a negative electrode, including the steps of:

(i) preparing a first slurry containing a first active material, a first binder, a first thickener and a first dispersion medium, and a second slurry containing a second active material, a second binder, a second thickener and a second dispersion medium;
(ii) coating the first slurry on one surface of the negative electrode current collector, and at the same time or with a predetermined time difference, coating the second slurry on the first slurry; and
(iii) forming an active material layer by drying the coated first slurry and second slurry at the same time using a drying device equipped with a hot air fan and an infrared (IR) heater.

According to the ninth embodiment, there is provided a method for manufacturing a negative electrode as defined in the eighth embodiment, wherein the first slurry is coated on one surface of the negative electrode current collector, and at the same time or with a time difference of 0.6 seconds or less, the second slurry is coated on the first slurry.

According to the tenth embodiment, there is provided a method for manufacturing a negative electrode as defined in the eighth or the ninth embodiment, wherein a hot air fan and an IR heater are used for drying from the start of the drying step in simultaneously drying the coated first slurry and second slurry to 1/2 section of the entire section of the drying step, and then only hot air fan is used for drying in the subsequent section.

Advantageous Effects

According to an embodiment of the present disclosure, it is possible to provide a negative electrode which can enhance minimum binding force (adhesion) of the negative electrode active material layer, while not increasing the content of a binder, and prevents detachment of the active material due to the uniform distribution of the binding force in a thickness direction of the negative electrode. In addition, according to an embodiment of the present disclosure, it is possible to provide a negative electrode which can have improved resistance characteristics because the binder serving as a resistance is positioned inside the active material layer, not distributed much on the surface of the active material layer, to prevent the binder from blocking the pores of the separator beyond the electrode surface, and the electrode contact between the current collector and the active material layer is stable.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

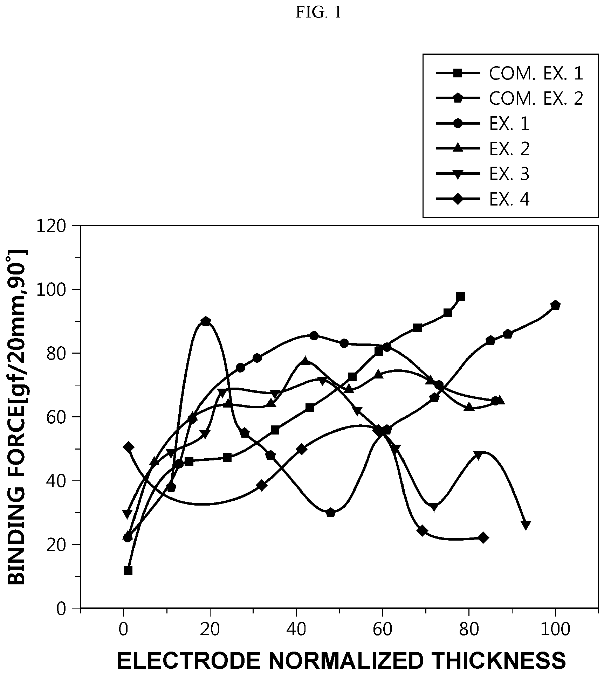

FIG. 1 is a graph illustrating change in binding force according to a normalized thickness of active material layers of the negative electrode in Examples 1-4 and Comparative Examples 1and 2.

BEST MODE

Hereinafter, it should be understood that the terms and words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In one aspect of the present disclosure, there is provided a negative electrode, including:

a negative electrode current collector; and
a negative electrode active material layer disposed on at least one surface of the negative electrode current collector,
and satisfying the following formula:

$$B/A \leq 1.2$$

wherein, in a graph measuring the binding force according to a normalized thickness of the active material layer, A is defined as a maximum value of the binding force of the active material layer in a normalized thickness of 20-60 and B is defined as a maximum value of the binding force of the active material layer in a normalized thickness of 70-90, and
the normalized thickness of the active material layer means a converted value of the active material layer thickness to be changed according to the measurement of the binding force on the assumption that the initial thickness of the active material layer is 100.

Herein, a method for measuring the binding force of the active material layer is to measure the binding force for each thickness by attaching a removal tape to the current collector and the active material layer followed by removing the tape. In this case, by measuring intrinsic physical properties of the binder having binding force that may hardly be measured by the active material and the conductive material, it is possible to accurately measure the binder only even in a mixture and figure out that the binder is distributed by thickness. As a result, there is an advantage that the distribution of the binder by thickness may be measured in a more accurate manner and measured at low cost within a short time.

The method for measuring the binding force of the active material layer includes the steps of:

measuring the thickness of the active material layer in a negative electrode having the active material layer including an active material, a conductive material, and a binder on the current collector (step 1);
fixing the active material layer of the negative electrode to the substrate so that it is in contact (step 2);
after attaching a removal tape to the current collector of the negative electrode, measuring the binding force and the thickness of the active material layer after removal while removing the removal tape and the current collector together (step 3);
after attaching a removal tape on the active material layer from which the current collector has been removed, measuring the binding force and the thickness of the active material layer after removal while removing a portion of the removal tape and the active material layer together, and repeating this measuring process to a measurement limit (step 4); and
checking the change in binding force according to the thickness of the active material layer through the measurement values measured in steps 3 and 4, in which case the thickness of the active material layer is converted into a normalized thickness and displayed (step 5).

First, in the step of measuring the thickness of the active material layer of the negative electrode (step 1), the thickness measurement for the active material layer may be performed by a Schopper type Thickness Gauge measuring instrument.

Next, in the step of fixing the active material layer of the negative electrode to the substrate so that it is in contact (step 2), the top of the active material layer is bound and fixed to the substrate for the purpose of the binding force measurement first from the current collector to the top of the active material layer.

Herein, a glass substrate may be used as the substrate, and a method of fixing the top of an active material layer of an electrode to the substrate may be performed by positioning a substrate attachment tape between the substrate and the top of the active material layer, but is not limited thereto. In this case, the binding force of the substrate attaching tape may be 500 gf/15 mm to 1500 gf/15 mm. However, a binding force of the substrate attaching tape is not limited thereto, and a tape having a binding force greater than each binding force between an active material layer and a current collector and between active material layers may be appropriately selected and used as the substrate attaching tape.

Subsequently, in the step of measuring the binding force and the thickness of the negative electrode after removal while attaching a removal tape to the current collector of the negative electrode and then removing the removal tape and the current collector together (step 3), it may be the first step to measure the binding force according to the thickness of the active material layer by measuring the binding force at that time and the thickness of the active material layer after removal by removing the removal tape and the current collector after attaching a removal tape to the current collector of the negative electrode having the upper end fixed to the glass plate in step 2.

Herein, a binding force of the removal tape may be 500 gf/15 mm to 1500 gf/15 mm, but is not limited thereto, and a tape having a binding force greater than each binding force between an active material layer and a current collector and between active material layers may be appropriately selected and used. The removal tape may have the same or different binding force as the substrate attaching tape in step 2.

The removal of the removal tape and the current collector in step 3 may be carried out by performing peeling test. For example, it may be a peeling test that the removal tape is moved by 50 mm at a speed of 300 mm/min in a direction where the removal tape is bent to 90° toward a surface without a binding force of the removal tape. However, the speed of the peeling test, and the distance and angle at which the removal tape has been removed are not limited thereto.

Through step 3, the current collector of the negative electrode may be removed, and a portion of the active material layer may be removed together.

In the method for measuring the distribution of the binder in the negative electrode according to the present disclosure, step 4 is a step of measuring the binding force and the thickness of the electrode after removal while attaching a removal tape to the active material layer from which the current collector is removed and then removing the removal tape and a portion of the active material layer together, and repeating this measuring process to a measurement limit. In step 4, after performing step 3, the binding force and the electrode thickness may be measured at each time when repeatedly performing the process of attaching and peeling a removal tape to the remaining active material layer. The removal of the removal tape and a portion of the active material layer in step 4 may be carried out by performing a peeling test in the same manner as in step 3.

However, unlike the removal of the current collector in step 3, the removal process may be performed on a portion of the active material layer by reducing the surface area of the removal tape, and the measurement value may be adjusted in the same unit by converting it into the surface area and binding force of the removal tape used in step 3. In this way, by reducing the surface area of the removal tape, it is possible to bring about cost reduction and time saving effect.

Herein, the removal of the active material layer may be achieved up to a measurement limit.

The measurement limit may mean that a portion of an active material layer is totally removed and a fixing material for fixing the substrate and the active material layer is exposed to the outside.

For example, when the removal tape is removed in the longitudinal direction, it may mean that the deviation value of the binding force according to the removal displacement increases significantly compared to the deviation value of the binding force according to the removal displacement of the immediately preceding removal tape, and specifically, it may mean that the deviation value of the binding force according to the removal displacement of the removal tape is 5 times or more than the deviation value of the binding force according to the removal displacement of the immediately preceding removal tape. However, it is not limited to the difference in the deviation value, but the value may vary depending on the binding force of the substrate attachment tape and the removal tape.

For example, when the active material layer is repeatedly removed, a portion of the active material layer is all removed and the substrate attachment tape is exposed. At this time, when the removal tape is attached thereon again, the portion from which the removal tape is bound to the substrate attachment tape and then removed may be measured with a significantly increased binding force than the portion from which the active material layer is removed. Accordingly, when the deviation value of the binding force appears large according to the removal displacement of the removal tape, it may be determined that the measurement limit has been reached.

Furthermore, the amount of the active material layer which is left on the substrate and the substrate attachment tape after measuring to the measurement limit, may be 0.001-20% based on the total active material layer.

In the method for measuring the distribution of the binder in the electrode according to the present disclosure, step 5 is a step of checking the distribution of the binder according to the thickness of the electrode through the values measured in steps 3 and 4.

In step 5, the distribution of the binder according to the thickness of the electrode may be checked by the measured values of the binding force and the thickness of the electrode while removing the removal tape.

For example, it is possible to check the distribution of the binder through the distribution of the binding force according to the thickness by a graph with the X-axis as the electrode thickness and the Y-axis as the binding force. In addition, through the dispersion and the standard deviation value of the binding force by the data, the distribution of the binder may be checked through the distribution of the binding force according to the thickness.

The negative electrode according to an aspect of the present disclosure satisfies the following formula:

$$B/A \leq 1.2,$$

wherein, in a graph measuring the binding force according to a normalized thickness of the active material layer,
A is defined as a maximum value of the binding force of the active material layer in a normalized thickness of 20-60 and B is defined as a maximum value of the binding force of the active material layer in a normalized thickness of 70-90.

The normalized thickness of the active material layer means a converted value of the active material layer thickness to be changed according to the measurement of the binding force on the assumption that the initial thickness of the active material layer is 100.

In the graph measuring the binding force according to the normalized thickness of the active material layer, the electrode normalized thickness of 0 corresponds to a position of the active material layer directly contacting the current collector, and the electrode normalized thickness of 100 corresponds to an outermost surface portion of the active material layer formed on the current collector, that is an initial thickness of the active material layer.

A, which is a maximum value of the binding force of the active material layer in a normalized thickness of 20-60, means a maximum value of the binding force in the relatively middle-lower regions of a height region corresponding to 20-60% based on a surface facing the current collector on the basis of the total thickness of the active material layer formed on the current collector.

In addition, B, which is a maximum value of the binding force of the active material layer in a normalized thickness of 70-90, means a maximum value of the binding force in the relatively upper region of a height region corresponding to 70-90% based on a surface facing the current collector on the basis of the total thickness of the active material layer formed on the current collector

In the present disclosure, B/A means the ratio of the maximum value B of the binding force in the height region corresponding to 70-90% based on a surface facing the current collector on the basis of the total thickness of the active material layer, which is relatively upper region, to the maximum value A of the binding force in the height region corresponding to 20-60% based on a surface facing the current collector on the basis of the total thickness of the active material layer, which is relatively middle-lower region.

By comparing the binding force in the upper region with the binding force in the middle-lower regions of the active material layer, it is possible to evaluate whether the distribution of the binder in the active material layer is uniform.

In an electrode such as a negative electrode and a positive electrode of a conventional commercialized battery, the electrode slurry is coated once on a current collector to form each electrode. In this case, when the binder distribution of the cross section of the active material layer of the electrode is measured, the binder content adjacent to the surface (upper region) of the active material layer is large, and the binder content toward the current collector (middle-lower regions) is decreasing. Herein, according to the graph measuring the binding force according to the normalized thickness of the active material layer of the present disclosure, B/A represents a high value amounting to 3 or more, or 5 or more (see Comparative Example 1 of FIG. 1 of the present disclosure). That is, in the conventional electrode, a binding force of the upper region of the active material layer is 3 times or more, or 5 times or more than a binding force of the middle-lower regions, so it may be found that the binders are considerably concentrated and distributed in the upper region.

In the present disclosure, B/A is 1.2 or less, specifically 0.3-1.2, or 0.35-1.0, or 0.4-0.92. When the B/A satisfies such ranges, the binding force between the active material layer and the current collector increases, thereby preventing an electrode from being deintercalated while repeating expansion and contraction during a subsequent assembly process or battery driving and ensuring durability, and the electrical contact is stably maintained to sufficiently secure electrical conductivity.

As described above, in case of an electrode such as the negative electrode and the positive electrode configured by coating electrode slurry once on the current collector, binders are largely distributed on the surface on the cross section of the active material layer of the electrode. Therefore, a maximum value of the binding force may be positioned at an uppermost portion of the active material layer as the binding force of the active material layer is increasing toward the surface portion of the active material layer.

On the other hand, according to an embodiment of the present disclosure, since the binder of the active material layer is not concentrated on the surface portion (upper or uppermost region) but is uniformly distributed even in the middle-lower regions, the maximum value of the binding force of the active material layer may be positioned at a thickness of 15-85 or a thickness of 25-75 when the thickness of the active material layer is converted into 100 in the graph measuring the binding force according to the normalized thickness of the active material layer.

When the position of the maximum binding force of the active material layer satisfies this range, it is possible to provide a negative electrode which can enhance minimum binding force of the negative electrode active material layer, while not increasing the content of a binder; and prevents detachment of the active material due to the uniform distribution of the binding force in a thickness direction of the negative electrode; and has improved resistance characteristics because the binder serving as a resistance is positioned inside the active material layer, not distributed much on the surface of the active material layer, to prevent the binder from blocking the pores of the separator beyond the electrode surface, and the electrode contact between the current collector and the active material layer is stable.

In an embodiment of the present disclosure, the active material of the active material layer may be applied by any negative electrode active material that is generally used, and particular examples of the active material may include a carbon-based active material, a silicon-based active material, and the like. Specifically, artificial graphite, natural graphite, hard carbon, soft carbon, graphitized carbon fiber, graphitized mesocarbon microbead, petroleum cokes, resin fired body, carbon fiber, pyrolysis carbon, Si, silicon oxide represented by $SiO_x$ ($0 < x \leq 2$), lithium titanium oxide (LTO), lithium metal, or two or more thereof may be included, but not limited thereto.

The artificial graphite is generally produced by carbonizing raw materials such as coal tar, coal tar pitch, and petroleum-based heavy substances at 2,500°C or higher, and thereafter, is used as negative electrode active material through adjustment of particles such as pulverization and secondary particle formation. In case of artificial graphite, crystals are randomly distributed in the particles, and have a lower sphericity and a somewhat pointed shape compared to crystals of natural graphite.

The artificial graphite used in an embodiment of the present disclosure may be mesophase carbon microbeads (MCMB), mesophase pitch-based carbon fiber (MPCF), artificial graphite graphitized in block form, artificial graphite graphitized in powder form, and the like, and has a sphericity of 0.91 or less, preferably 0.6-0.91, and more preferably 0.7-0.9.

Additionally, the artificial graphite may have a particle diameter of 5-30 $\mu$m, preferably 10-25 $\mu$m.

The natural graphite is generally formed of a plate-shaped aggregate before being processed, and the plate-shaped particles are made into a spherical shape having a smooth surface through post-treatment processing such as particle crushing and reassembly in order to be used as an active material for manufacturing an electrode.

The natural graphite used in an embodiment of the present disclosure has a sphericity of greater than 0.91 and 0.97 or less, preferably 0.93-0.97, and more preferably 0.94-0.96.

The natural graphite may have a particle diameter of 5-30 $\mu$m or 10-25 $\mu$m.

The active material layer may include two or more types of active materials, and in this case, active materials having different kinds of materials may be distributed in a surface direction near the current collector in the active material layer, or even if active materials have the same kind of materials, two or more types of active materials with different average particle diameters or shapes may be included. Surely, the active material layer may contain two or more types of active materials having different kinds of materials and different shapes and average particle diameters.

For example, the active material layer may contain natural graphite alone or a mixture of natural graphite and artificial graphite in a lower region near the current collector, and may contain artificial graphite alone or a mixture of natural graphite and artificial graphite or an active material of a kind or combination of materials different from the lower region in an upper region near the surface. In addition, even when the active material layer contains an active material of the same kind (for example, a mixture of natural graphite and artificial graphite), an active material with a small average particle diameter may be included in a lower region, and an active material with a large average particle diameter may be included in an upper region.

When kinds of active materials included in the lower region and the upper region of the active material layer are different from each other or average particle diameters or shapes are different from each other, a mixing region (intermixing) in which these different kinds of active materials are mixed may exist at a portion where the lower region and the upper region are touching each other. This is because when the slurry for a lower layer including the first active material and the slurry for an upper layer including the second active material are continuously coated on a current collector at the same time or with a very short time difference, and then simultaneously dried to form the active material layer, a predetermined mixing section is generated on the interface where the slurry for a lower layer is in contact with the slurry for an upper layer before drying, and then the mixing section is formed in the shape of a layer of intermixing region, while the slurry for a lower layer and the slurry for an upper layer are dried subsequently.

In an embodiment of the present disclosure, when an upper region of the active material layer is a mixture of artificial graphite and natural graphite, a weight ratio of the artificial graphite to natural graphite may be 9.99:0.01-0.01:9.99, specifically 9.7:0.3-7:3. If the range of the weight ratio is satisfied, it is possible to exhibit better output.

In addition, when a lower region of the active material layer is a mixture of artificial graphite and natural graphite, a weight ratio of the artificial graphite to the natural graphite may be 9.99:0.01-0.01:9.99 specifically 9.5:0.5-6:4. If the range of the weight ratio is satisfied, it is possible to exhibit better output with the same conductive content.

In an embodiment of the present disclosure, the overall thickness of the negative electrode active material layer is not particularly limited. For example, it may be 40-300 $\mu$m. In addition, when the active material layer includes an upper region and a lower region, the upper region and the lower region may have a thickness in the range of 8-240 $\mu$m, respectively.

Herein, when the thickness of the upper region is 20% or more of the total thickness of the active material layer, there is an effect of improving the diffusion rate of lithium ions. When the thickness of the upper region is less than 20%, pores on the surface of the electrode become insufficient, and thus it is difficult to expect an improvement in the diffusion rate of lithium ions.

A method for manufacturing a negative electrode according to an embodiment of the present disclosure may comprise the following steps of:

(i) preparing a first slurry containing a first active material, a first binder, a first thickener and a first dispersion medium, and a second slurry containing a second active material, a second binder, a second thickener and a second dispersion medium;

(ii) coating the first slurry on one surface of the negative electrode current collector, and at the same time or with a predetermined time difference, coating the second slurry on the first slurry; and

(iii) forming an active material layer by drying the coated first slurry and second slurry at the same time using a drying device equipped with a hot air fan and an infrared (IR) heater.

In the method according to an embodiment of the present disclosure, the negative electrode current collector used as a substrate for forming the active material layer, is not particularly limited, as long as it has conductivity, while not causing any chemical change in the corresponding battery. For example, copper, stainless steel, aluminum, nickel, titanium, backed carbon, copper or stainless steel surface-treated with carbon, nickel, titanium, silver, etc., an aluminum-cadmium alloy, or the like, may be used.

Although the current collector is not particularly limited in its thickness, it may have a thickness of 3-500 $\mu$m.

The first slurry is coated and the second slurry is coated on the first slurry at the same time or with a predetermined time difference, and according to an embodiment of the present disclosure, the predetermined time difference may be 0.6 seconds or less, 0.02-0.6 seconds, 0.02-0.06 seconds, or 0.02-0.03 seconds. Since the occurrence of such a time difference during coating of the first slurry and the second slurry is due to coating equipment, it may be more preferable to coat the first slurry and the second slurry at the same time. The method of coating the second slurry on the first slurry may be performed by using an apparatus such as a double slot die.

The first active material and the second active material may include any negative electrode active material that is generally used, and for example, each independently includes a carbon-based active material, a silicon-based active material, or the like. Specifically, artificial graphite, natural graphite, hard carbon, soft carbon, graphitized carbon fiber, graphitized mesocarbon microbead, petroleum cokes, resin fired body, carbon fiber, pyrolysis carbon, Si, silicon oxide represented by SiOx ($0 < x \leq 2$), lithium titanium oxide (LTO), lithium metal, or two or more thereof may be included, but not limited thereto.

Particular examples of each of the first binder and the second binder may include various types of binder polymers, such as polyvinylidene fluoride-co-hexafluoropropylene (PVDF-co-HFP), polyvinylidene fluoride, polyacrylonitrile, polymethyl methacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, styrene butyrene rubber (SBR), fluoro-rubber, various copolymers thereof, or the like.

Each of the first dispersion medium and the second dispersion medium may independently include N-methyl pyrrolidone, acetone, water, or the like.

In addition, the first thickener and second thickener may independently include carboxymethyl cellulose (CMC), carboxyethyl cellulose, polyvinylpyrrolidone, or the like.

The first slurry and the second slurry may optionally further include a conductive material. The conductive material is not particularly limited, as long as it causes no chemical change in the corresponding battery and has conductivity. Particular examples of the conductive material include: carbon black, such as carbon black, acetylene black, ketjen black, channel black, furnace black, lamp black or thermal black; conductive fibers, such as carbon fibers or metallic fibers; metal powder, such as fluorocarbon, aluminum or nickel powder; conductive whisker, such as zinc oxide or potassium titanate; conductive metal oxide, such as titanium oxide; conductive materials, such as polyphenylene derivatives, or the like.

In the step of forming the active material layer, a step of pressing the active material layer after the drying step may be further included. Herein, the pressing may be performed by a method generally used in the art such as roll pressing, for example, under a pressure of 1-20 MPa at a temperature of 15-30°C.

Next, an active material layer is formed by drying the coated first slurry and second slurry at the same time using a drying device equipped with a hot air fan and an infrared (IR) heater.

According to an embodiment of the present disclosure, the drying device may include a drying chamber through which an electrode sheet containing a current collector and an electrode active material slurry applied to the current collector passes; a stage positioned on the bottom surface of the electrode sheet to move the electrode sheet up, down, left, and right inside the drying chamber; a hot air fan supplying hot air to the electrode sheet so as to apply convective heat to the electrode sheet; and an infrared (IR) dryer applying radiant heat to the electrode sheet.

In addition, the drying device may further include an infrared thermometer for measuring a change in surface temperature of the electrode sheet. The stage, which is positioned on the bottom surface of the electrode sheet, applies conductive heat to the electrode sheet, and may include an apparatus for measuring mass change of the electrode sheet.

The infrared (IR) heater may be a mid-infrared heater or a near-infrared heater. Herein, the mid-infrared heater means a heater that emits mid-infrared rays having a wavelength of approximately 2-5 $\mu$m, and the near-infrared heater means a heater that emits near-infrared rays having a wavelength of approximately 0.7-1.5 $\mu$m.

The electrode drying device may further include an air supply fan forming an air supply flow from the outside of the drying chamber; an exhaust fan forming an exhaust flow from the inside of the drying chamber; and a circulation fan forming a circulation flow inside the drying chamber.

Herein, the infrared heater may be a modular infrared heater detachable from the electrode drying device. Accordingly, it is easy to adjust the quantity of and exchange the infrared heater, and the output and type of the heater may be easily modified according to the needs of the user.

According to an embodiment of the present disclosure, a configuration where 5-15 hot air fans or 8-10 hot air fans are disposed between the adjacent hot air fans may be referred to as one drying zone, and such drying zones may be connected in 5-15 or 8-12 or 10-12 to form a drying device.

According to an embodiment of the present disclosure, the drying device may include a plurality of drying zones, wherein hot air fans together with IR heaters may be included in the front end drying zones and only hot air fans except IR heaters may be included in the middle and rear end drying zones. This is because it is required to raise the temperature of the drying device in a short time at the beginning after coating the slurry, so IR heaters are used together with hot air fans, but after the temperature is raised to a target temperature, dispersion medium in the slurry may be removed with hot air fans only.

In addition, the hot air flow of the hot air fan may be controlled according to the drying zone by applying a method of moving only from the top to the bottom of the drying device, or a method of moving together from the top to the bottom and from the bottom to the top of the drying device.

The drying device according to an embodiment of the present disclosure may have 10 drying zones from the first drying zone in which a slurry-coated current collector first enters to the tenth drying zone. Herein, 8 hot air fans are disposed in the first drying zone to the third drying zone only, wherein IR heaters are respectively disposed between each of the hot air fans, so that a total of 8 IR heaters may be provided. Additionally, in the fourth drying zone to the sixth drying zone, the hot air flow of the hot air fans is controlled in such an only way of proceeding from the top to the bottom of the drying device, and in the seventh drying zone to the tenth drying zone, the hot air fan where the hot air flows from the top to the bottom of the drying device and the hot air fan where the hot air flows from the bottom to the top of the drying device may be alternately arranged and operated.

The electrode drying process may comprise a preheating section (a section in which the temperature is increased while the moisture content is decreased slightly), a constant-rate section (a section in which the temperature is maintained constantly while the moisture content is decreased significantly), and a falling-rate section (a section in which the temperature is increased while the moisture content is decreased slightly).

Since the binder moves to the surface of the coating layer of the electrode in a section where the moisture content is decreased significantly, migration of the binder occurs in the constant-rate section.

At this time, as the constant-rate drying time increases, the binder movement speed decreases (inversely proportional relationship), and as the constant-rate drying speed increases, the binder movement speed increases (quadratic function graph). That is, when the preheating section is shortened in the electrode drying process step, the constant-rate drying time is relatively increased, and as a result, the binder movement phenomenon may be reduced.

As described above, in a drying step of the present disclosure, a drying device in which hot air fans and IR heaters are combined is used, and according to an embodiment of the present disclosure, in the preheating section, which is an initial time, instead of a drying method using only a hot air fan, a hot air fan and an IR heater are used together to reduce a time required to a target temperature and increase the constant-rate drying section, hence suppressing binder movement to the surface of the coating layer.

In an embodiment of the present disclosure, it may be dried using a hot air fan and an IR heater together from the start of the drying step to 1/2 of the entire section of the drying step, from the start of the drying step to 1/3 of the entire section of the drying step, or from the start of the drying step to 3/10 of the entire section, and it may be dried using only hot air in the subsequent section.

As a result, in the negative electrode according to an embodiment of the present disclosure, the binder is not largely distributed on the surface of the active material layer but is positioned inside the active material layer, and the electrode contact between the current collector and the active material layer is stable, thereby improving resistance characteristics and increasing the minimum binding force between the current collector and the active material layer.

In another aspect of the present disclosure, there is provided a lithium secondary battery including the negative electrode obtained as described above. Particularly, the lithium secondary battery may be obtained by injecting a lithium salt-containing electrolyte to an electrode assembly including a positive electrode, the negative electrode as described above and a separator interposed between both electrodes.

The positive electrode may be obtained by mixing a positive electrode active material, a conductive material, a binder and a solvent to form slurry, and coating the slurry directly onto a metal current collector, or casting the slurry onto a separate support, peeling a positive electrode active material film from the support and laminating the film on a metal current collector.

The positive electrode active material used in the positive electrode active material layer may be any one active material particle selected from the group comprising $LiCoO_2$, $LiNiO_2$, $LiMn_2O_4$, $LiCoPO_4$, $LiFePO_4$ and $LiNi_{1-x-y-z}Co_xM1_yM2_zO2$ (wherein each of M1 and M2 independently represents any one selected from the group comprising Al, Ni, Co, Fe, Mn, V, Cr, Ti, W, Ta, Mg and Mo, each of x, y and z independently represents the atomic ratio of an element forming oxide, and $0 \leq x < 0.5$, $0 \leq y < 0.5$, $0 \leq z < 0.5$, and $0 < x + y + z \leq 1$), or a mixture of at least two of them.

Meanwhile, the same conductive material, binder and solvent as used for manufacturing the negative electrode may be used.

The separator may be a conventional porous polymer film used conventionally as a separator. For example, the porous polymer film may be a porous polymer film made of a polyolefininc polymer, such as ethylene homopolymer, propylene homopolymer, ethylene-butene copolymer, ethylene/hexene copolymer or ethylene/methacrylate copolymer. Such a porous polymer film may be used alone or in the form of a laminate. In addition, an insulating thin film having high ion permeability and mechanical strength may be used. The separator may include a safety reinforced separator (SRS) including a ceramic material coated on the surface of the separator to a small thickness. In addition, a conventional porous non-woven web, such as non-woven web made of high-melting point glass fibers or polyethylene terephthalate fibers, may be used, but the scope of the present disclosure is not limited thereto.

The electrolyte includes a lithium salt as an electrolyte salt and an organic solvent for dissolving the lithium salt.

Any lithium salt used conventionally for an electrolyte for a secondary battery may be used without particular limitation. For example, the anion of the lithium salt may be any one selected from the group comprising $F^-$, $Cl^-$, $Br^-$, $I^-$, $NO_3^-$, $N(CN)_2^-$, $BF_4^-$, $ClO_4^-$, $PF6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

The organic solvent contained in the electrolyte may be any organic solvent used conventionally without particular limitation. Typical examples of the organic solvent include at least one selected from the group comprising propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxyethane, diethoxyethane, vinylene carbonate, sulforan, gamma-butyrolactone, propylene sulfite, and tetrahydrofuran.

Particularly, among the carbonate-based organic solvents, ethylene carbonate and propylene carbonate, which are cyclic carbonates, are organic solvents having high viscosity and a high dielectric constant, and thus may be used preferably, since they can dissociate the lithium salt in the electrolyte with ease. When such a cyclic carbonate is used after mixing it with a linear carbonate having low viscosity and a low dielectric constant, such as dimethyl carbonate or diethyl carbonate, it is possible to prepare an electrolyte having higher electrical conductivity, more preferably.

Optionally, the electrolyte used according to the present disclosure may further include additives contained in the conventional electrolyte, such as an overcharge-preventing agent, or the like.

The lithium secondary battery according to an embodiment of the present disclosure may be obtained by interposing the separator between the positive electrode and the negative electrode to form an electrode assembly, introducing the electrode assembly to a pouch, a cylindrical battery casing or a prismatic battery casing, and then injecting the electrolyte thereto. In a variant, the lithium secondary battery may be obtained by stacking the electrode assemblies, impregnating the stack with the electrolyte, and introducing the resultant product to a battery casing, followed by sealing.

According to an embodiment of the present disclosure, the lithium secondary battery may be a stacked, wound, stacked and folded or cable type battery.

The lithium secondary battery according to the present disclosure may be used for a battery cell used as a power source for a compact device, and may be used preferably as a unit battery for a medium- or large-size battery module including a plurality of battery cells. Particular examples of medium- or large-size devices include electric vehicles, hybrid electric vehicles, plug-in hybrid electric vehicles, power storage systems, or the like. Particularly, the lithium secondary battery may be useful for batteries for hybrid electric vehicles and new & renewable energy storage batteries, requiring high output.

MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

Example 1: Manufacture of Negative Electrode and Lithium Secondary Battery

<Manufacture of Negative Electrode>

Both 30.0 parts by weight of natural graphite having an average sphericity of 0.95 and 63.8 parts by weight of artificial graphite having an average sphericity of 0.9 as negative electrode active materials, 1 part by weight of carbon black as a conductive material, 3.7 parts by weight of styrene-butadiene rubber (SBR) as a binder, and 1.5 parts by weight of carboxymethylcellulose (CMC) as both a binder and a thickener were mixed, and water as a dispersion medium was added thereto to prepare a first slurry having a solid content of 46 wt%.
Both 30.7 parts by weight of natural graphite having an average sphericity of 0.95 and 65.3 parts by weight of artificial graphite having an average sphericity of 0.9 as negative electrode active materials, 1 part by weight of carbon black as a conductive material, 1.5 parts by weight of styrene-butadiene rubber (SBR) as a binder, and 1.5 parts by weight of carboxymethylcellulose (CMC) as both a binder and a thickener were mixed, and water as a dispersion medium was added thereto to prepare a second slurry having a solid content of 46 wt%.
The first slurry was coated on one surface of copper (Cu) thin film as a negative electrode current collector having a thickness of 10 $\mu$m and at the same time, the second slurry was coated on the first slurry, by using a dual slot die.
Thereafter, the coated first slurry and the second slurry were dried at the same time by using a drying device equipped with hot air fans and IR heaters to form an active material layer.
Specifically, a drying chamber of the drying device had 10 drying zones from the first drying zone in which the slurry-coated current collector first enters to the tenth drying zone. Herein, 8 hot air fans were disposed in the first drying zone to the third drying zone only, wherein IR heaters were respectively disposed between each of the hot air fans, so that a total of 8 IR heaters were provided. Additionally, in the fourth drying zone to the sixth drying zone, the hot air flow of the hot air fans was controlled in such an only way of proceeding from the top to the bottom of the drying device, and in the seventh drying zone to the tenth drying zone, the hot air fan where the hot air flows from the top to the bottom of the drying device and the hot air fan where the hot air flows from the bottom to the top of the drying device were alternately arranged and operated.
A stage was positioned on a lower surface of the slurry-coated current collector (electrode sheet) in the drying device to move the slurry-coated current collector, wherein a running speed of the slurry-coated current collector was 50 m/min. The speed of the air supply fan forming the air supply flow from the outside of the drying chamber was 1000 rpm, and the speed of the exhaust fan forming the exhaust air flow from the inside of the drying chamber was 1000 rpm. The temperature of the hot air fan was 140°C in the first drying zone, 130°C in the second drying zone, 120°C in the third to eighth drying zones, 90°C in the ninth drying zone, and 50°C in the tenth drying zone.
The IR heaters installed in the first to third drying zones emit near-infrared rays with a wavelength of 0.7 $\mu$m, and the irradiation length of the IR heater is 30 cm per heater (the length of the lamp irradiated with near-infrared rays from the IR heater is 30 cm), so 24 IR heaters (8 per drying zone, 24 in 3 drying zones) were uniformly disposed throughout the three drying zones. Herein, only 3 IR heaters were used while maintaining a uniform interval out of total 24 IR heaters. That is, the IR heater was operated at 12.5% efficiency based on the efficiency when all the IR heaters were used.
The formed upper and lower active material layers were pressed at the same time by a roll pressing to obtain a negative electrode including an upper/lower active material layer having a double-layer structure with a loading amount of 16 mg/cm$^2$ in weight per unit area after drying.

<Manufacture of Positive Electrode>

Li(Ni$_{0.6}$Mn$_{0.2}$Co$_{0.2}$)O$_2$(NCM-622) as a positive electrode active material, carbon black as a conductive material and polyvinylidene fluoride (PVDF) as a binder were mixed at a weight ratio of 96:2:2, and water as a dispersion medium was added thereto to prepare slurry for a positive electrode active material layer. The slurry was applied on one surface of an aluminum current collector having a thickness of 15 $\mu$m, and drying and pressing were performed under the same conditions as the negative electrode to obtain a positive electrode. Herein, the weight per unit area after drying was 28.1 mg/cm$^2$ based on the dry weight of the positive electrode active material layer.

<Manufacture of Lithium Secondary Battery>

A non-aqueous electrolyte was prepared by dissolving LiPF$_6$ to a concentration of 1.0 M in an organic solvent in which ethylene carbonate (EC), dimethyl carbonate (DMC) and diethyl carbonate (DEC) were mixed in a composition of 1:2:1 (volume ratio).

A polyolefin separator was interposed between the positive electrode and the negative electrode obtained above and embedded in a pouch cell, and then the electrolyte was injected thereto to obtain a lithium secondary battery.

Example 2: Manufacture of Negative Electrode and Lithium Secondary Battery

Both 30.0 parts by weight of natural graphite having an average sphericity of 0.95 and 63.7 parts by weight of artificial graphite having an average sphericity of 0.9 as negative electrode active materials, 1 part by weight of carbon black as a conductive material, 3.8 parts by weight of styrene-butadiene rubber (SBR) as a binder, and 1.5 parts by weight of carboxymethylcellulose (CMC) as both a binder and a thickener were mixed, and water as a dispersion medium was added thereto to prepare a first slurry having a solid content of 46 wt%.

Both 30.9 parts by weight of natural graphite having an average sphericity of 0.95 and 65.6 parts by weight of artificial graphite having an average sphericity of 0.9 as negative electrode active materials, 1 part by weight of carbon black as a conductive material, 1 part by weight of styrene-butadiene rubber (SBR) as a binder, and 1.5 parts by weight of carboxymethylcellulose (CMC) as both a binder and a thickener were mixed, and water as a dispersion medium was added thereto to prepare a second slurry having a solid content of 46 wt%.

A negative electrode, a positive electrode and a lithium secondary battery were obtained in the same manner as Example 1, except that the prepared first slurry and second slurry were used, only 6 IR heaters were used in the drying step while maintaining a uniform interval among total 24 IR heaters, so the IR heater was operated at 25% efficiency based on the efficiency when all the IR heaters were used, and the temperature of the hot air fan was 110°C in the third to eighth drying zones.

Example 3: Manufacture of Negative Electrode and Lithium Secondary Battery

Both 29.9 parts by weight of natural graphite having an average sphericity of 0.95 and 63.4 parts by weight of artificial graphite having an average sphericity of 0.9 as negative electrode active materials, 1 part by weight of carbon black as a conductive material, 4.2 parts by weight of styrene-butadiene rubber (SBR) as a binder, and 1.5 parts by weight of carboxymethylcellulose (CMC) as both a binder and a thickener were mixed, and water as a dispersion medium was added thereto to prepare a first slurry having a solid content of 46 wt%.

Both 30.9 parts by weight of natural graphite having an average sphericity of 0.95 and 65.6 parts by weight of artificial graphite having an average sphericity of 0.9 as negative electrode active materials, 1 part by weight of carbon black as a conductive material, 1 part by weight of styrene-butadiene rubber (SBR) as a binder, and 1.5 parts by weight of carboxymethylcellulose (CMC) as both a binder and a thickener were mixed, and water as a dispersion medium was added thereto to prepare a second slurry having a solid content of 46 wt%.

A negative electrode, a positive electrode and a lithium secondary battery were obtained in the same manner as Example 1, except that the prepared first slurry and second slurry were used, only 9 IR heaters were used in the drying step while maintaining a uniform interval among total 24 IR heaters, so the IR heater was operated at 37.5% efficiency based on the efficiency when all the IR heaters were used, and the temperature of the hot air fan was 100°C in the third to eighth drying zones.

Example 4: Manufacture of Negative Electrode and Lithium Secondary Battery

Both 29.5 parts by weight of natural graphite having an average sphericity of 0.95 and 62.8 parts by weight of artificial graphite having an average sphericity of 0.9 as negative electrode active materials, 1 part by weight of carbon black as a conductive material, 5.2 parts by weight of styrene-butadiene rubber (SBR) as a binder, and 1.5 parts by weight of carboxymethylcellulose (CMC) as both a binder and a thickener were mixed, and water as a dispersion medium was added thereto to prepare a first slurry having a solid content of 46 wt%.

Both 31.2 parts by weight of natural graphite having an average sphericity of 0.95 and 66.3 parts by weight of artificial graphite having an average sphericity of 0.9 as negative electrode active materials, 1 part by weight of carbon black as a conductive material, 0 part by weight of styrene-butadiene rubber (SBR) as a binder, and 1.5 parts by weight of carboxymethylcellulose (CMC) as both a binder and a thickener were mixed, and water as a dispersion medium was added thereto to prepare a second slurry having a solid content of 46 wt%.

A negative electrode, a positive electrode and a lithium secondary battery were obtained in the same manner as Example 1, except that the prepared first slurry and second slurry were used, only 12 IR heaters were used in the drying step while maintaining a uniform interval among total 24 IR heaters, so the IR heater was operated at 50% efficiency based on the efficiency when all the IR heaters were used, and the temperature of the hot air fan was 90°C in the third to eighth drying zones.

Comparative Example 1: Manufacture of Negative Electrode and Lithium Secondary Battery

Both 30.4 parts by weight of natural graphite having an average sphericity of 0.95 and 64.5 parts by weight of artificial graphite having an average sphericity of 0.9 as negative electrode active materials, 1 part by weight of carbon black as a conductive material, 2.6 parts by weight of styrene-butadiene rubber (SBR) as a binder, and 1.5 parts by weight of carboxymethylcellulose (CMC) as both a binder and a thickener were mixed, and water as a dispersion medium was added thereto to prepare a first slurry and a second slurry having a solid content of 46 wt%.

A negative electrode, a positive electrode and a lithium secondary battery were obtained in the same manner as Example 1, except that the prepared first slurry and second slurry were used, a drying device equipped with hot air fans only without IR heaters was used, and the temperature of the hot air fan was 135°C in the third to eighth drying zones.

Comparative Example 2: Manufacture of Negative Electrode and Lithium Secondary Battery

Both 30.0 parts by weight of natural graphite having an average sphericity of 0.95 and 63.8 parts by weight of artificial graphite having an average sphericity of 0.9 as negative electrode active materials, 1 part by weight of carbon black as a conductive material, 3.7 parts by weight of styrene-butadiene rubber (SBR) as a binder, and 1.5 parts by weight of carboxymethylcellulose (CMC) as both a binder and a thickener were mixed, and water as a dispersion medium was added thereto to prepare a first slurry having a solid content of 46 wt%.

Both 30.7 parts by weight of natural graphite having an average sphericity of 0.95 and 65.3 parts by weight of artificial graphite having an average sphericity of 0.9 as negative electrode active materials, 1 part by weight of carbon black as a conductive material, 1.5 parts by weight of styrene-butadiene rubber (SBR) as a binder, and 1.5 parts by weight of carboxymethylcellulose (CMC) as both a binder and a thickener were mixed, and water as a dispersion medium was added thereto to prepare a second slurry having a solid content of 46 wt%.

The first slurry was coated on one surface of copper (Cu) thin film as a negative electrode current collector having a thickness of 10 $\mu$m by using a dual slot die.

Thereafter, the coated first slurry was dried by using a drying device equipped with hot air fans and IR heaters under the same conditions as in Example 1 to form a first active material layer.

The previously prepared second slurry was coated on the first active material layer and dried in the same manner as the above-described first slurry to form a second active material layer (upper active material layer) on the first active material layer (lower active material layer). The formed upper and lower active material layers were pressed at the same time by a roll pressing to obtain a negative electrode including an upper/lower active material layer having a double-layer structure with a loading amount of 16 mg/cm$^2$ in weight per unit area after drying.

Thereafter, a positive electrode and a lithium secondary battery were obtained in the same manner as in Example 1.

Measuring Binding Force of Negative Electrode

The negative electrodes obtained in Examples 1-4 and Comparative Examples 1 and 2 were cut to have a width and a length of 15 mm X 50 mm respectively, to prepare samples for measurement.

It was fixed using a tape for attaching the substrate so that the active material layer of the prepared negative electrode sample was in contact on the glass plate as the substrate. Thereafter, a removal tape having a width and a length of 20 mm X 50 mm was attached to the current collector of the negative electrode sample, and a 90° peeling test was performed at a speed of 300 mm/min at 50 mm to remove the current collector, and then the binding force and the thickness of the active material layer after removal were measured. Next, after attaching a removal tape having a width and a length of 10 mm X 50 mm on the active material layer from which the current collector was removed, the peeling test was performed to measure the binding force and the thickness of the active material layer after removing the removal tape. This was repeated over and over again until the thickness of the remaining active material layer became very small and it was no longer possible to measure the binding force. At this time, the thickness of the active material layer, which is changed as the binding force measurement is being proceeded, was converted to the normalized thickness of the active material layer based on the assumption that the initial thickness of the active material layer is 100, and the results were shown in FIG. 1 and Table 1.

Measuring Resistance

Secondary batteries obtained in Examples 1-4 and Comparative Examples 1 and 2 (with a size of 4 X 4 cm) were charged at a 1 C CC/CV mode of 4.55 V at a room temperature of 25 °C, and then discharge resistance was calculated from the voltage after application with a current corresponding to 2.5 C at SOC 50 for 30 seconds and shown in Table 1 below.

[Table 1]

| | Maximum value A of the binding force of the active material layer at a normalized thickness of 20-60 of the active material layer (gf/20mm) | Maximum value B of the binding force of the active material layer at a normalized thickness of 70-90 of the active material layer (gf/20mm) | B/A | Resistance (mΩ) |
|---|---|---|---|---|
| Ex. 1 | 82.9 | 69.8 | 0.84 | 1.84 |
| Ex. 2 | 77.0 | 71.1 | 0.92 | 1.82 |
| Ex. 3 | 67.5 | 48.1 | 0.71 | 1.79 |
| Ex. 4 | 55.4 | 22.1 | 0.40 | 1.775 |
| Com. Ex. 1 | 80.2 | 97.8 | 1.22 | 1.92 |
| Com. Ex. 2 | 90 | 161.25 | 1.79 | 1.85 |

Referring to FIG. 1 and Table 1, unlike the negative electrode of Comparative Example 1 to which only a hot air fan was applied in the drying step, in case of the negative electrode of Examples 1-4 to which a hot air fan and an IR heater were applied together, by shortening the time required to reach the target temperature in the preheating section that is the initial point of the drying step and increasing the constant-rate drying section to suppress the movement of the binder to the surface of the coating layer, the binder is not distributed much on the surface of the active material layer but is positioned inside the active material layer, so that the minimum binding force between the current collector and the active material layer (binding force value at a normalized thickness of 0) increased, and the highest binding force was exhibited in the middle rather than the surface of the active material layer. Additionally, in the negative electrode of Examples 1-4, as the binder is not distributed much on the surface of the active material layer but is positioned inside the active material layer, the electrode contact between the current collector and the active material layer was stable, so that the resistance characteristics of the secondary batteries employing the negative electrodes of Examples 1-4 were significantly improved compared to the secondary batteries of Comparative Examples 1 and 2.

On the other hand, the negative electrode of Examples 1-4 and Comparative Example 1 was obtained in a double-layer structure by sequentially coating the first slurry and the second slurry on the current collector and drying at the same time (wet-on-wet method), whereas the negative electrode of Comparative Example 2 was obtained in a double-layer structure by firstly coating and drying the first slurry on the current collector to form the first active material layer (lower active material layer), and then coating and drying the second slurry on the already formed lower active material layer to form the second active material layer (upper active material layer) (wet-on-dry method).

Referring to FIG. 1, as a result of the difference from the method of manufacturing the negative electrodes of Examples 1-4 and Comparative Example 1, it may be seen that the negative electrode of Comparative Example 2 exhibits very different binding force distribution. Specifically, in the preparation of the negative electrode of Comparative Example 2, when the first slurry coated on the current collector is dried, a plurality of binders are distributed in the upper position of the lower active material layer due to the binder migration phenomenon, and thereafter, when the second slurry is coated on the lower active material layer, the binder solution of the second slurry (a solution of the second binder and the second dispersion medium) permeates into the lower active material layer at the interface between the lower active material layer and the second slurry. As the binder solution of the second slurry permeates into the lower active material layer, the binder of the second slurry is partially supplied to the upper portion of the lower active material layer in contact with the second slurry, and the binder (first binder) distributed on the upper side of the lower active material layer may be dissolved by the second dispersion medium included in the binder solution of the introduced second slurry. Then, in the drying step of the second slurry, the binder in the second slurry and the binder of the binder solution derived from the upper side of the lower active material layer adjacent to the second slurry move to the upper side of the second slurry. As a result, the binder is most distributed on the upper side of the upper active material layer formed from the second slurry. Meanwhile, when the second slurry permeates into the lower active material layer, a portion of the supplied second binder remains in the central portion of the lower active material layer. Therefore, according to the binding force distribution curve of Comparative Example 2 of FIG. 1, it can be seen that the binding force increases up to the central portion of the lower active material layer in which the binder is distributed relatively much, and then the binding force is greatly reduced on the upper side of the lower active material layer in which the content of the binder is reduced, and then the binding force increases toward the upper side of the upper active material layer, and thus the largest binding force value is exhibited at the upper side of the upper active material layer, where the binder is expected to be distributed the most. In addition, as the negative electrode of Comparative Example 2 has such binding force distribution of the active material layer, the binder acting as a resistance is excessively distributed on the electrode surface to block the pores of the separator, and thus the resistance characteristics of the secondary battery employing the negative electrode of Comparative Example 2 is remarkably decreased (resistance value greatly increased).

## Claims

1. A negative electrode, comprising:

   a negative electrode current collector; and
   a negative electrode active material layer disposed on at least one surface of the negative electrode current collector,
   and satisfying the following formula:

   $$B/A \leq 1.2,$$

   wherein, in a graph measuring the binding force according to a normalized thickness of the active material layer, A is defined as a maximum value of the binding force of the active material layer in a normalized thickness of 20-60 and B is defined as a maximum value of the binding force of the active material layer in a normalized thickness of 70-90, and
   the normalized thickness of the active material layer means a converted value of the active material layer thickness to be changed according to the measurement of the binding force on the assumption that the initial thickness of the active material layer is 100.

2. The negative electrode according to claim 1, wherein the B/A is 0.3-1.2.

3. The negative electrode according to claim 1, wherein, in a graph measuring the binding force according to a normalized thickness of the active material layer, the maximum value of the binding force of the active material layer is positioned at 15-85 when the thickness of the active material layer is converted into 100.

4. The negative electrode according to claim 3, wherein the maximum value of the binding force of the active material layer is positioned at 25-75 when the thickness of the active material layer is converted into 100.

5. The negative electrode according to claim 1, wherein the method for measuring the binding force according to the normalized thickness of the negative electrode active material layer includes the steps of:

   measuring the thickness of the active material layer in which the active material layer including an active material, a conductive material, and a binder is formed on the current collector (step 1);
   fixing the active material layer of the negative electrode to the substrate so that it is in contact (step 2);
   after attaching a removal tape to the current collector of the negative electrode, measuring the binding force and the thickness of the active material layer after removal while removing the removal tape and the current collector together (step 3);
   after attaching a removal tape on the active material layer from which the current collector has been removed, measuring the binding force and the thickness of the active material layer after removal while removing a portion of the removal tape and the active material layer together, and repeating this measuring process to a measurement limit (step 4); and
   checking the change in binding force according to the thickness of the active material layer through the measurement values measured in steps 3 and 4, in which case the thickness of the active material layer is converted into a normalized thickness and displayed (step 5).

6. The negative electrode according to claim 1, wherein the active material of the active material layer includes artificial graphite, natural graphite, hard carbon, soft carbon, graphitized carbon fiber, graphitized mesocarbon microbead, petroleum cokes, resin fired body, carbon fiber, pyrolysis carbon, Si, silicon oxide represented by SiOx ($0 < x \leq 2$), lithium titanium oxide (LTO), lithium metal, or two or more thereof.

7. A lithium secondary battery including the negative electrode according to any one claim among claims 1 to 6.

8. A method for manufacturing a negative electrode, comprising the steps of:

(i) preparing a first slurry containing a first active material, a first binder, a first thickener and a first dispersion medium, and a second slurry containing a second active material, a second binder, a second thickener and a second dispersion medium;
(ii) coating the first slurry on one surface of the negative electrode current collector, and at the same time or with a predetermined time difference, coating the second slurry on the first slurry; and
(iii) forming an active material layer by drying the coated first slurry and second slurry at the same time using a drying device equipped with a hot air fan and an IR heater.

9. The method for manufacturing a negative electrode according to claim 8, wherein the first slurry is coated on one surface of the negative electrode current collector, and at the same time or with a time difference of 0.6 seconds or less, the second slurry is coated on the first slurry.

10. The method for manufacturing a negative electrode according to claim 8, wherein a hot air fan and an IR heater are used for drying from the start of the drying step in simultaneously drying the coated first slurry and second slurry to 1/2 section of the entire section of the drying step, and then only hot air fan is used for drying in the subsequent section.

FIG. 1

## INTERNATIONAL SEARCH REPORT

| International application No. |
|---|
| **PCT/KR2021/015624** |

| A. | CLASSIFICATION OF SUBJECT MATTER |
|---|---|

**H01M 4/13**(2010.01)i; **H01M 4/139**(2010.01)i; **H01M 4/04**(2006.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/13(2010.01); F26B 13/10(2006.01); H01M 10/052(2010.01); H01M 10/058(2010.01); H01M 4/04(2006.01); H01M 4/131(2010.01); H01M 4/139(2010.01); H01M 4/1391(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(negative electrode), 바인더(binder), 제1 슬러리(first slurry), 제2 슬러리 (second slurry), 건조(drying), IR 히터(IR heater), 열풍(hot air)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2020-046026 A1 (SK INNOVATION CO., LTD.) 05 March 2020 (2020-03-05)<br>See claims 1-11; paragraphs [0035], [0039], [0044] and [0045]; example 1; and table 1. | 1-10 |
| Y | JP 2014-060095 A (NEC ENERGY DEVICES LTD.) 03 April 2014 (2014-04-03)<br>See paragraphs [0019], [0026], [0028], [0035], [0036], [0048] and [0049]; and figure 1. | 1-10 |
| Y | KR 10-2017-0042175 A (LG CHEM, LTD.) 18 April 2017 (2017-04-18)<br>See claim 1; and paragraph [0016]. | 5 |
| A | KR 10-2017-0075963 A (LG CHEM, LTD.) 04 July 2017 (2017-07-04)<br>See entire document. | 1-10 |
| A | JP 5325332 B1 (NGK INSULATORS LTD.) 23 October 2013 (2013-10-23)<br>See entire document. | 1-10 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 February 2022** | **25 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/015624**

| Patent document cited in search report | | | Publication date (day/month/year) | Patent family member(s) | | | Publication date (day/month/year) |
|---|---|---|---|---|---|---|---|
| WO | 2020-046026 | A1 | 05 March 2020 | CN | 112585781 | A | 30 March 2021 |
| | | | | EP | 3846250 | A1 | 07 July 2021 |
| | | | | JP | 2021-535537 | A | 16 December 2021 |
| | | | | KR | 10-2020-0026055 | A | 10 March 2020 |
| | | | | KR | 10-2021-0014716 | A | 09 February 2021 |
| | | | | KR | 10-2022-0009474 | A | 24 January 2022 |
| | | | | KR | 10-2262044 | B1 | 09 June 2021 |
| | | | | KR | 10-2350190 | B1 | 14 January 2022 |
| | | | | US | 2021-0167391 | A1 | 03 June 2021 |
| JP | 2014-060095 | A | 03 April 2014 | JP | 6075753 | B2 | 08 February 2017 |
| KR | 10-2017-0042175 | A | 18 April 2017 | CN | 107925130 | A | 17 April 2018 |
| | | | | CN | 107925130 | B | 31 July 2020 |
| | | | | JP | 2018-524784 | A | 30 August 2018 |
| | | | | JP | 6581286 | B2 | 25 September 2019 |
| | | | | KR | 10-1982571 | B1 | 27 May 2019 |
| | | | | US | 10663528 | B2 | 26 May 2020 |
| | | | | US | 2018-0210034 | A1 | 26 July 2018 |
| | | | | WO | 2017-061830 | A1 | 13 April 2017 |
| KR | 10-2017-0075963 | A | 04 July 2017 | KR | 10-2071585 | B1 | 30 January 2020 |
| JP | 5325332 | B1 | 23 October 2013 | JP | 2014-130742 | A | 10 July 2014 |
| | | | | TW | 201447206 | A | 16 December 2014 |
| | | | | WO | 2014-103786 | A1 | 03 July 2014 |

Form PCT/ISA/210 (patent family annex) (July 2019)

**EP 4 207 349 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200143792